# FASCICULE DE BREVET EUROPEEN

(11) **EP 4 713 614 B1**
(45) Date de publication et mention de la délivrance du brevet: **04.11.2026**
(21) Numéro de dépôt: 24728032.4
(22) Date de dépôt: 17.05.2024
(51) Int. Cl.: F17C 1/16, B29C 70/32, B32B 1/08, B32B 27/08, B32B 27/12, B32B 27/40, C08J 7/04, B29L 31/00

(54) **RÉSERVOIR DE GAZ SOUS PRESSION POUR VÉHICULE**
DRUCKGASBEHÄLTER FÜR EIN FAHRZEUG
PRESSURISED GAS TANK FOR A VEHICLE

(30) Priorité: 19.05.2023 FR 2304976
(43) Date de publication de la demande: 25.03.2026
(73) Titulaire: PLASTIC OMNIUM NEW ENERGIES FRANCE, 69007 Lyon (FR)
(72) Inventeur: NONY-DAVADIE, Clément, 1200 BRUXELLES (BE); MICHEL, Christopher, 1200 BRUXELLES (BE); RUGGI, David, 1200 BRUXELLES (BE); SUHR, Dominique, 1200 BRUXELLES (BE)
(74) Mandataire: LLR
(86) Numéro de dépôt international: PCT/EP2024/063662
(87) Numéro de publication internationale: WO 2024/240626

(56) Documents cités:
- CN-A- 114 636 095
- US-A1- 2011 313 084
- US-A1- 2017 307 139

## Description

L'invention concerne le domaine des réservoirs sous pression pour véhicule, tel qu'un véhicule automobile, un camion, un bus, un train ou encore un bateau. L'invention concerne plus particulièrement un réservoir de gaz sous pression pour véhicule, ainsi qu'un véhicule comprenant un tel réservoir de gaz sous pression, ainsi que son procédé de préparation.

Les réservoirs de gaz sous pression sont utilisés pour stocker et transporter tout type de gaz sous pression. Les réservoirs de gaz sous pression sont généralement classés selon l'un des cinq types suivants : un réservoir de gaz sous pression dit de type I ayant une construction entièrement métallique ; un réservoir de gaz sous pression dit de type II ayant une construction métallique comprenant un enroulement en fibres pour le renforcement de sa partie cylindrique ; un réservoir de gaz sous pression dit de type III ayant un liner métallique avec une structure de renforcement composite ; un réservoir de gaz sous pression dit de type IV comprenant un liner en plastique avec une structure de renforcement composite ; et un réservoir de gaz sous pression dit de type V ayant une structure de renforcement composite et étant dépourvu de liner.

Ainsi on connaît déjà dans l'état la technique, un réservoir de gaz sous pression, par exemple, configuré pour stocker du gaz à une pression d'au moins 350 bar ou d'au moins 700 bar, le gaz étant, par exemple, de l'hydrogène. Ainsi, ce réservoir de gaz sous pression est configuré pour être utilisé par un véhicule équipé du réservoir de gaz sous pression pour diverses fonctions, en tant que source d'énergie. Ce réservoir est habituellement fabriqué en matériau composite pour des raisons de gain de masse et de sécurité.

Un tel réservoir de gaz sous pression est classiquement composé d'une enveloppe interne appelée liner, laquelle possède une fonction d'étanchéité vis-à-vis du gaz contenu dans le réservoir. Le liner est, par exemple, fait d'un matériau plastique, dans le cas d'un réservoir de type IV, choisi pour sa légèreté et son faible coût de fabrication, ou d'un métal comme de l'aluminium, ou bien d'une autre matière comme un alliage métallique, dans le cas d'un réservoir de type III. Le liner de type « plastique » comprend au moins une ouverture pour le remplissage et le vidage du réservoir. Il est fabriqué par injection ou par rotomoulage ou par extrusion-soufflage d'un matériau polymère thermoplastique ou thermodurcissable comme, par exemple, le polyéthylène, le polyamide, le polyphthalamide, le polyuréthane, le silicone, le polyoxyméthylène. Avantageusement, dans le cadre d'un réservoir de Type IV, le plastique choisi pour le liner peut être chargé de fibres, de particules de tailles nanométrique ou micrométrique, ou encore, être composé de plusieurs couches. Les fibres de renfort sont, par exemple, des fibres de verre, des fibres de carbone, des fibres de basalte, des fibres d'aramide, des fibres polymères, des fibres de silice, des fibres de polyéthylène, des fibres naturelles, des fibres métalliques, des fibres d'alliages métalliques ou des fibres céramiques. Les particules peuvent être choisies parmi différents types de matériaux, comme, par exemple, les céramiques, le verre, les métaux, les matériaux organiques, ou une combinaison de ceux-ci. Ces charges permettent d'augmenter la résistance à la déformation du matériau obtenu. Dans un matériau polymère chargé de fibres de renfort, les fibres de renfort et le matériau polymère sont enchevêtrés pour former un matériau monobloc. Dans le cadre d'un empilement de plusieurs couches, celles-ci peuvent être obtenues à partir de différents matériaux, comme, par exemple, les métaux ou les matériaux organiques. Cette approche multicouche permet de réduire la perméabilité au gaz du liner. Les deux approches mentionnées peuvent être combinées.

Le liner est généralement de forme globalement cylindrique et présente deux extrémités en forme de dôme. Le liner comporte une ouverture, laquelle est généralement surmontée par un embout de remplissage/distribution de gaz. Le fluide sous pression exerce de fortes contraintes sur la surface interne du liner, lesquelles peuvent porter atteinte à l'intégrité du liner et provoquer des fuites dangereuses, notamment avec des gaz combustibles comme l'hydrogène.

Pour améliorer les propriétés mécaniques du réservoir de gaz sous pression, le liner est entouré par une structure de renforcement composite, généralement réalisée par enroulement autour du liner de bandes de fibres imprégnées d'une résine, selon différents angles. Les fibres mises en œuvre peuvent être choisies parmi les céramiques, les verres et les matériaux organiques. Par exemple, les fibres de carbone, les fibres de verre, les fibres d'aramides sont communément employées. Les résines considérées peuvent être thermodurcissables ou thermoplastiques. Par exemple, pour les résines thermodurcissables on utilise des résines de type époxy ou vinylester ; et, pour les résines thermoplastiques, des résines de type polyamide ou polyétheréthercétone (PEEK). Le processus d'enroulement peut être effectué en voie humide ; les fibres plongeant alors dans un bain de résine avant d'être enroulées, ou bien en voie sèche ; les fibres se présentant alors sous forme de bande de fibres parallèles imprégnées de résine, plus communément appelé « Tow preg ». Les résines mises en œuvre peuvent être chargées de particules de tailles nanométriques et/ou micrométriques afin d'améliorer les propriétés de la structure de renforcement composite. Ces particules peuvent être à base d'un matériau choisi parmi les matériaux céramiques, les verres, les métaux, les matériaux organiques ou toutes combinaisons de ceux-ci. Par exemple, on peut utiliser des billes de verre creuses permettant un allègement et une réduction des risques de délaminage de la structure de renforcement composite, du graphène ou des nanotubes de carbone conduisant à une amélioration des propriétés de la structure de renforcement composite d'un point de vue électrique ou thermique, et à une réduction du risque de délamination de la structure de renforcement composite, des billes de caoutchouc permettant une augmentation de la ductilité, une réduction du risque de délamination ainsi qu'une réduction de contraintes résiduelles au sein de la structure de renforcement composite.

Toutefois, ces réservoirs sous pression doivent résister à des contraintes chimiques et/ou mécaniques pour répondre aux normes de sécurité lors de leur utilisation dans un véhicule automobile. Ils doivent, en particulier, répondre aux exigences établies par le Règlement n°134 de la Commission économique pour l'Europe et les Nations unies (CEE-ONU) - Prescriptions uniformes relatives à l'homologation des véhicules automobiles et de leurs composants en ce qui concerne les prescriptions de sécurité des véhicules fonctionnant à l'hydrogène [2019/795].

Dans leur condition normale d'utilisations, telles qu'encadrées par les standards de certification, les réservoirs hautes pressions pour les applications de transport, doivent être capables de supporter différents types d'agressions extérieures. Parmi celles-ci, on peut relever les agressions chimiques liées à l'exposition à des acides et bases fortes à concentration élevée ou à des solvants organiques ou non, les agressions mécaniques liées à des impacts comme du gravillonnage lors du roulage, ou les agressions environnementales du type brouillard salin, exposition à l'ozone et/ou exposition aux UV. L'intervalle de température sur lequel le réservoir doit conserver ses propriétés s'étend de -40°C à +85°C à 95% d'humidité relative selon le Règlement n°134 de la Commission économique pour l'Europe et les Nations unies (CEE-ONU) - Prescriptions uniformes relatives à l'homologation des véhicules automobiles et de leurs composants en ce qui concerne les prescriptions de sécurité des véhicules fonctionnant à l'hydrogène [2019/795].

Classiquement, cette résistance aux agressions chimiques, mécaniques et/ou thermiques est apportée par la présence d'une couche de protection supplémentaire à l'extérieur du réservoir. Celle-ci est en général constituée soit d'une couche de fibre de verre imprégnée de résine intumescente (appliquée par enroulement filamentaire en voie sèche ou humide), d'un revêtement intumescent en général à base d'époxy deux composantes (2K) appliquée par pulvérisation (spray), dosage directe ou injection, ou d'une combinaison des deux. La couche de protection à base d'époxy contient des agents intumescents qui, après exposition au feu, se dilatent et créent une barrière isolante. L'expansion et la calcination de la résine par la réaction intumescente permet de réduire et de ralentir le transfert thermique des flammes à la structure de renforcement composite, aussi appelé « laminé », retardant la décomposition de la résine du laminé. Ce phénomène permet aux équipements de vidange rapide, installés sur les embouts de remplissage/distribution de gaz, aussi appelés « embases », de purger le réservoir et d'éviter la défaillance de celui-ci.

Toutefois de telles couches de protection ne permettent pas de garantir un niveau de protection satisfaisant de la structure de renforcement composite à des épaisseurs minimales du fait de leur fragilité intrinsèque. Par exemple, la formation de fissures post impact créée un chemin permettant, entre autres, à des produits chimiques d'entrer en contact avec la structure de renforcement composite et donc de la corroder. Cette corrosion augmente le risque de défaillance du réservoir. Ce phénomène de fissuration post-impact est exacerbé aux températures négatives.

Par ailleurs, le système à base d'époxy ne présente pas de capacité d'amortissement des impacts à basse température. En outre, le système à base d'époxy requiert de longues durées de réticulation à température ambiante, ce qui entraîne l'utilisation de four pour accélérer la réticulation et donc augmente les coûts. Ce retard de durcissement, lié à la durée de réticulation, peut aussi favoriser l'affaissement de la structure de renforcement composite et la formation de poches d'air, entraînant des points de faiblesse en son sein.

Le document US 2011/313084 A1 décrit des compositions de revêtements dont une composition comprenant une couche de protection contenant un agent retardateur de flamme sous forme d'un agent intumescent et une composition comprenant des couches de protection à base de polyurée ou de polyurée et polyuréthane.

Il est donc souhaitable de disposer d'une couche de protection capable de résister aux contraintes chimiques, mécaniques et thermiques imposées au réservoir, dans de larges gammes de température, et ne présentant pas ces inconvénients. Il est, en outre, souhaitable que la couche de protection possède ces propriétés tout en étant relativement légère.

De manière inattendue, il a été trouvé par les inventeurs que ces buts et d'autres peuvent être atteints avec un revêtement de protection à base de polyurée, de préférence, appliqué selon des modalités déterminées.

C'est pourquoi la présente invention a pour objet un réservoir sous pression selon la revendication 1 et comprenant au moins une structure de renforcement composite, revêtu au moins en partie par un revêtement de protection, dans lequel le revêtement de protection comprend au moins deux couches de protection à base de polyurée, au moins une des couches de protection à base de polyurée comprenant, en outre, au moins un agent retardateur de feu qui est un agent intumescent, la ou les polyurée(s) étant des produits de réaction d'au moins un durcisseur et d'au moins une résine, pour lesquels (i) la résine est un composé polyamine aromatique ou aliphatique, optionnellement substitué par au moins une fonction alcool, (ii) le durcisseur est un composé polyisocyanate aromatique, cycloaliphatique, hétérocyclique, alicyclique ou aliphatique, et leurs produits de réaction sous forme d'oligomères aliphatiques ou aromatiques au moins une résine d'une première couche de protection à base de polyurée étant différente d'au moins une résine d'une deuxième couche de protection à base de polyurée ; la couche de protection contenant un agent intumescent étant la couche la plus externe du revêtement de protection. Avantageusement, le réservoir sous pression selon l'invention comprend un liner et une structure de renforcement composite, et est revêtu au moins en partie par un revêtement de protection, qui comprend au moins deux couches de protection à base de polyurée telles que définies dans l'ensemble du présent texte. Le liner est notamment à base d'un matériau plastique.

L'invention a aussi pour objet un procédé de préparation d'un tel réservoir conformément à la revendication 14 et comprenant les étapes suivantes :
a) obtention d'un mandrin,
b) enroulement d'une structure de renforcement composite autour d'au moins une partie du mandrin pour obtenir un corps creux,
c) formation sur au moins une partie de la surface de la structure de renforcement composite d'un revêtement de protection, ladite étape de formation du revêtement de protection comprenant les étapes de :
   c1) dépôt sur au moins une partie de la surface de la structure de renforcement composite d'un mélange (D) d'au moins une résine et d'au moins un durcisseur, le rapport stœchiométrique entre la résine et le durcisseur étant compris entre 2:1 et 1:2, de préférence, de 1,3:1 à 1:1,3, notamment sensiblement égal à 1:1, et polymérisation du mélange (D) pour obtenir une première couche de protection à base de polyurée,
   c2) dépôt sur au moins une partie de la surface du corps creux revêtu d'une couche de protection obtenu à l'issue de l'étape c1), d'un mélange (I) d'au moins une résine, d'au moins un durcisseur et d'au moins un agent retardateur de feu, le rapport stœchiométrique entre la résine et le durcisseur étant compris entre 2:1 et 1:2, de préférence, de 1,3:1 à 1:1,3, notamment sensiblement égal à 1:1, et polymérisation du mélange (I) pour obtenir une deuxième couche de protection à base de polyurée, au moins une résine du mélange (D) étant différente d'au moins une résine du mélange (I).

Selon l'un des modes de réalisation de l'invention, le mandrin est un corps fusible. Il fondra et disparaîtra au cours des étapes suivantes du procédé.

Selon un autre mode de réalisation de l'invention, le mandrin est un liner, notamment un liner en matériau plastique.

Un mode de réalisation de l'invention a alors pour objet un procédé de préparation d'un tel réservoir, comprenant les étapes suivantes :
a) obtention d'un liner, préférentiellement à base de matériau plastique,
b) enroulement d'une structure de renforcement composite autour d'au moins une partie du liner pour obtenir un corps creux,
c) formation sur au moins une partie de la surface de la structure de renforcement composite d'un revêtement de protection, ladite étape de formation du revêtement de protection comprenant les étapes de :
   c1) dépôt sur au moins une partie de la surface de la structure de renforcement composite d'un mélange (D) d'au moins une résine et d'au moins un durcisseur, le rapport stœchiométrique entre la résine et le durcisseur étant compris entre 2:1 et 1:2, de préférence, de 1,3:1 à 1:1,3, notamment sensiblement égal à 1:1, et polymérisation du mélange (D) pour obtenir une première couche de protection à base de polyurée,
   c2) dépôt sur au moins une partie de la surface du corps creux revêtu d'une couche de protection obtenu à l'issue de l'étape c1), d'un mélange (I) d'au moins une résine, d'au moins un durcisseur et d'au moins un agent retardateur de feu, le rapport stœchiométrique entre la résine et le durcisseur étant compris entre 2:1 et 1:2, de préférence, de 1,3:1 à 1:1,3, notamment sensiblement égal à 1:1, et polymérisation du mélange (I) pour obtenir une deuxième couche de protection à base de polyurée, au moins une résine du mélange (D) étant différente d'au moins une résine du mélange (I).

L'invention a encore pour objet un véhicule automobile comprenant un tel réservoir qui est donc revêtu au moins en partie par un revêtement de protection.

De manière connue, une polyurée est un polymère comportant une pluralité de liaison urée (-NH-CO-NH-) résultats de la réaction d'une polyamine ayant au moins deux fonctions amine primaire avec un polyisocyanate, c'est-à-dire un composé portant au moins deux fonctions isocyanates.

D'autres composants peuvent intervenir dans la fabrication de polyurée, notamment des catalyseurs et des additifs.

US-A1-2013/0153458 décrit un système de revêtement d'un substrat, notamment d'un réservoir, comprenant une couche interne et une couche externe constituées de polyuréthane ou de polyurée, entre lesquelles se trouve une couche intermédiaire de gel visqueux comprenant des tensioactifs et du polybutadiène qui assure leur adhésion.

CN-A-114636095 décrit un récipient de stockage d'hydrogène comprenant un liner entouré de plusieurs couches de fibres enroulées selon des axes différents ; une couche de polyurée est étalée à la surface extérieure des couches de fibres.

Ces documents ne permettent pas de résoudre les problèmes à la base de la présente invention.

Dans le contexte de la présente invention, on entend par résine un composé polyamine aromatique ou aliphatique, optionnellement substitué par au moins une fonction alcool. Les fonctions amine peuvent être primaire, secondaire ou tertiaire, de préférence, le composé comporte des fonctions amine primaire.

La résine peut notamment être choisie dans le groupe constitué par les composés suivants : polyoxypropylènediamine, diéthylméthylbenzènediamine, glycéryl poly(oxypropylène)triamine, les polyalkyl- ou polyaryl-amines et les polyétheramines, en particulier, parmi éthylène diamine ; 1,2-diaminopropane ; 1,3-diaminopropane ; 2,5-diamino-2,5-diméthylhexane ; 1,11-diaminoundécane ; 1,12-diaminododécane ; 2,4-hexahydrotoluylène diamine ; 2,6-hexahydrotoluylène diamine ; 2,4'-diamino-dicyclohexyl méthane isophoronediamine ; N-méthyl-propylène-1,3-diamine ; 1,6-hexaméthylènediamine ; 1,4-diaminocyclohexane ; 1,3-diaminocyclohexane ; N,N'-diméthyléthylènediamine; 4,4'-dicyclohexyl-methanediamine ; 2,4-diaminotoluene ; 2,6-diaminotoluene ; 3,5-diethyl-2,4-diaminotoluene ; 3,5-diethyl-2,6-diaminotoluene ; les 4,4'-diamino-diphenylmethanes mono-, di-, tri- ou tetra-alkyl substitués, et les amino alcools tels que éthanolamine, 1-aminopropanol, 2-aminopropanol. On peut aussi citer les prépolymères de la famille Jeffamine^{®} commercialisés, par exemple, par Huntsman ou Hycar ^{®} commercialisé par Goodrich. Un prépolymère est un oligomère ou un polymère présentant des groupes réactifs qui lui permettent de participer à une polymérisation ultérieure. Un oligomère est une molécule constituée d'un nombre généralement inférieur à dix, d'éléments identiques ou très semblables.

Par durcisseur, dans le contexte de l'invention, on entend un composé polyisocyanate aromatique, cycloaliphatique, hétérocyclique, alicyclique ou aliphatique, et leurs produits de réaction ; il peut s'agir d'un monomère, polymère, ou prépolymère. Le composé polyisocyanate comprend au moins deux fonctions isocyanates et inclut notamment les di-isocyanates, triisocyanates, tétraisocyanates et leurs mélanges.

Le composé polyisocyanate peut, en particulier, être choisi dans le groupe comprenant toluène-diisocyanate (TDI), méthylène diphényl diisocyanate (MDI), isophorone diisocyanate (IPDI), hexaméthylène diisocyanate (HDI), pentaméthylène diisocyanate (PDI) et leurs prépolymères. Les prépolymères sont, de préférence, mis à réagir entre eux avant leur incorporation dans la composition.

On utilise, en particulier, un composé polyisocyanate choisi parmi les polymères d'alpha-hydro-oméga.-hydroxypoly[oxy(méthyl-1,2-éthanediyle)] avec le 1,1'-méthylènebis[isocyanatobenzène], la masse de réaction (reaction mass) du 4,4'-méthylènediphényle diisocyanate (MDI) et du o-(pisocyanatobenzyl) phényle isocyanate, le 4,4'-méthylènediphényle diisocyanate (MDI), les oligomères du 4,4'-méthylènediphényle diisocyanate (MDI) et leurs mélanges.

L'utilisation de polyisocyanates aliphatiques est préférée lorsqu'on cherche à préparer un produit qui ne jaunit pas.

Le rapport stœchiométrique entre le(s) composant(s) résine et le(s) composé(s) polyisocyanate est généralement compris entre 2:1 et 1:2, en particulier, compris entre 1,8:1 et 1:1,8, de préférence, entre 1,5:1 et 1:1,5, de manière encore préférée entre 1,3:1 et 1:1,3. De bons résultats sont obtenus pour des revêtements de protection pour lesquels la ou les polyurée(s) est/sont un produit de réaction d'au moins une résine et d'au moins un composé polyisocyanate dans des rapports de 1:1,2 à 1,2:1, en particulier, pour des rapports d'environ 1:1 plus ou moins 5% (1:1,05 à 0,95) ou de 1:1 plus ou moins 3% (1:1,03-0,97).

Par couche à base de polyurée, on entend une couche comprenant une ou plusieurs polyurées, notamment un mélange de deux, trois ou plus polyurées ; de préférence, au moins 80% de la couche est composée de polyurée, en particulier, la polyurée ou le mélange de polyurées constitue au moins 90%, notamment au moins 95% de la couche à base de polyurée. Ces pourcentages sont exprimés en poids par rapport au poids total des polymères présents dans la couche de polyurée. Les charges, additifs et/ou agents intumescents ne sont pas compris dans cette définition de la couche à base de polyurée. Les polymères de la couche à base de polyurée peuvent ainsi être constituées à 100% de polyurées.

Selon l'invention, au moins une résine d'une première couche de protection à base de polyurée est différente d'au moins une résine d'une deuxième couche de protection à base de polyurée.

Selon un mode de réalisation, au moins un composé polyisocyanate (ou durcisseur) d'une première couche de protection à base de polyurée est différent d'au moins un composé polyisocyanate (ou durcisseur) d'une deuxième couche de protection à base de polyurée.

Ces deux modes de réalisation peuvent être combinés, au moins une résine et au moins un composé polyisocyanate d'une première couche de protection à base de polyurée sont différents d'au moins une résine et au moins un composé polyisocyanate d'une deuxième couche de protection à base de polyurée.

Il est entendu que tout ou partie de la ou des polyurée(s) de ladite première couche à base de polyurée est différente de la ou des polyurée(s) de ladite deuxième couche à base de polyurée du revêtement de protection.

Le revêtement de protection comporte au moins deux couches à base de polyurée, il peut ainsi comporter, en particulier, deux couches à base de polyurée, notamment trois couches à base de polyurée, voire quatre couches à base de polyurée ou davantage.

Des additifs tels que des absorbeurs d'UV, des photostabilisants à amine encombrée, des antioxydants, des adjuvants de dispersion et de broyage, des agents mouillants, des modificateurs d'impact, des antimousses, des stabilisateurs de suspension, des biocides, etc., peuvent être ajoutés au liant pour améliorer la fabricabilité et la durabilité globale des revêtements de la présente invention.

Avantageusement, au moins une des couches du revêtement de protection contient au moins un additif choisi parmi les absorbeurs d'UV, les stabilisateurs à la lumière, les antioxydants, les agents dispersants, les agents mouillants tels que des tensioactifs, les agents plastifiants, les antimousses et les atténuateurs d'impact, également appelés modificateurs d'impact. Avantageusement, elle comprend un additif choisi parmi les agents tensioactifs qui peut remplir une fonction d'agent mouillant et de stabilisateur de suspension.

Le nombre et l'épaisseur des couches à base de polyurée dans le revêtement selon l'invention seront adaptés par l'homme du métier, en fonction des propriétés visées. Dans tous les cas, l'épaisseur totale du revêtement de protection est inférieure ou égale à 12 mm, notamment inférieure ou égale à 8 mm, en particulier, inférieure ou égale à 4 mm. Il est entendu que l'épaisseur totale du revêtement de protection est généralement supérieure ou égale à environ 1 mm, notamment supérieure ou égale à 2 mm. Des revêtements de protection selon l'invention ont, en particulier, une épaisseur totale de 2 mm à 4 mm, notamment de 2,5 mm à 4 mm.

Avantageusement, la ou les polyurée(s) est choisie de telle sorte que la déformation élastique de chaque couche de protection à base de polyurée est supérieure à la déformation élastique maximale de la dernière couche du laminé recouvrant le liner, sur tout l'intervalle de température et d'humidité relative d'utilisation du réservoir. Les conditions normales d'utilisation sont définies dans le règlement n°134 de la CEE-ONU (Prescriptions uniformes relatives à l'homologation des véhicules automobiles et de leurs composants en ce qui concerne les prescriptions de sécurité des véhicules fonctionnant à l'hydrogène [2019/795]) parue au journal officiel du 17/05/2019.

La déformation élastique est mesurée par des essais de traction selon la norme ISO 527-1:2019, à des températures de -45°C à 85°C à 95% d'humidité.

En effet, il a maintenant été montré qu'un revêtement de protection selon la présente invention répond aux exigences de sécurité du règlement n°134 cité ci-dessus.

En particulier, il protège le réservoir à des températures de -40°C à +85°C, il peut supporter des impacts de 30 Joules à -40°C et confère une résistance aux agents chimiques et environnementaux (UV, corrosion) ; il permet une résistance au feu en retardant le feu par ses propriétés intumescentes.

Avantageusement, au moins une couche de protection à base de polyurée contient un agent intumescent choisi parmi le groupe des composés halogénés, des composés phosphorés, des composés borés, des hydroxydes métalliques et des oxydes métalliques et du mélange d'au moins deux d'entre eux. La concentration en agent intumescent dans la couche à base de polyurée peut être comprise entre 0,1% et 50% en poids, par rapport au poids total de la couche à base de polyurée, notamment être de 10 à 24% en poids.

Les agents intumescents halogénés sont, en particulier, choisis parmi les composés chlorés et/ou bromés tels que les polybromo-diphényléthers (PBDE), le tétrabromo-bisphénol A, les hexabromo-cyclododécanes, le décabromo-diphényléthane, le Dechlorane plus (retardateur de flamme polychloré produit par OXYCHEM) et les paraffines chlorées à chaîne courte (SCCP).

Les composés borés sont, en particulier, des polyborates.

Les composés phosphorés sont, en particulier, des polyphosphates.

Les hydroxydes métalliques sont, en particulier, choisis parmi l'hydroxyde d'aluminium et l'hydroxyde de magnésium.

Les oxydes métalliques sont, en particulier, choisis dans le groupe comprenant le dioxyde de titane, la silice, l'oxyde d'aluminium et l'oxyde d'antimoine.

La ou les couches de protection peuvent notamment comporter, en outre, des charges. En particulier, au moins une des couches de protection à base de polyurée contient au moins une charge sous forme de particules ou de fibres, ladite charge étant choisie parmi les céramiques, les métaux, les oxydes métalliques, les plastiques et leurs mélanges.

De préférence, au moins une des couches de protection à base de polyurée ne contient pas d'agent retardateur de feu qui est un agent intumescent. Cette ou ces couche(s) de protection est/sont située(s) à l'intérieur de la couche de protection contenant au moins un agent intumescent.

Une couche de protection ne contenant pas d'agent intumescent dans le revêtement selon l'invention a, de préférence, une température de transition vitreuse Tg, mesurée par DMA (analyse mécanique dynamique) qui est inférieure ou égale à -40°C, notamment inférieure ou égale à -43°C, avantageusement inférieure ou égale à -45°C.

Avantageusement, une couche de protection à base de polyurée contenant un agent intumescent dans le revêtement selon l'invention a, de préférence, une température de transition vitreuse Tg, mesurée par DMA (analyse mécanique dynamique) inférieure à -20°C.

Ladite couche de protection contenant un agent intumescent présente avantageusement un degré d'expansion à 180°C inférieur à vingt fois son épaisseur, de préférence, inférieur à quinze fois son épaisseur.

De préférence, dans la couche de protection ne contenant pas d'agent intumescent la ou les polyurée(s) est/sont essentiellement aliphatique(s) : elle(s) est/sont préparée(s), de préférence, à partir d'amines à chaînes polymériques longues et ramifiées avec peu d'amines aromatiques.

De préférence, dans la couche de protection contenant un agent intumescent, la ou les polyurée(s) est/sont essentiellement aromatique(s) : elles sont préparée(s), de préférence, à partir d'amines à chaînes aliphatiques courtes ou aromatiques.

Selon un mode de réalisation avantageux, les durcisseurs mis en œuvre pour la préparation des polyurées de chacune desdites première et deuxième couches de protection sont identiques ou compatibles.

Par compatible, on entend qu'au moins un durcisseur comprend un mélange de composés polyisocyanate, et qu'au moins 60% de la composition des composés polyisocyanate d'un durcisseur est identique à celle des composés polyisocyanate d'un second durcisseur, en particulier, au moins 80%.

Lorsque les deux couches à base de polyurée du revêtement de protection sont en contact, elles présentent une très bonne adhésion entre elles sans qu'il soit nécessaire d'introduire une couche de colle entre elles ou, d'une manière générale sans qu'il soit nécessaire de promouvoir l'adhésion entre ces couches.

Des couches à base de polyurée selon l'invention peuvent, en particulier, être obtenues à partir d'au moins un durcisseur choisi parmi les polymères d'alpha-hydro-oméga-hydroxypoly[oxy(méthyl-1,2-éthanediyl)] avec le 1,1'-méthylènebis[isocyanatobenzène], la masse de réaction (reaction mass) du 4,4'-méthylènediphényl diisocyanate (MDI) et du o-(pisocyanatobenzyl) phényl isocyanate, le 4,4'-méthylènediphényl diisocyanate (MDI), les oligomères du 4,4'-méthylènediphényl diisocyanate (MDI), et leurs mélanges.

Avantageusement, au moins une couche à base de polyurée est obtenue à partir d'une résine choisie dans le groupe constitué par polyoxypropylènediamine ; diéthylméthylbenzènediamine, glycéryl poly(oxypropylène)triamine ; il s'agit, de préférence, d'une couche ne contenant pas d'agent intumescent et qui présente les caractéristiques mentionnées dans ce qui précède.

Avantageusement au moins une couche à base de polyurée est obtenue à partir d'une résine choisie dans le groupe constitué par diéthylméthylbenzènediamine et les dérivés d'oléylamine ; il s'agit, de préférence, d'une couche contenant un agent intumescent. Elle contient, de préférence, en outre, au moins un composé choisi parmi le décaborate de diammonium, l'hexane 6-olide et les acides gras insaturés en C18.

Sans être lié par une théorie particulière, la couche à base de polyurée contenant l'agent intumescent confère les propriétés de résistance au feu du revêtement de protection. La couche à base de polyurée ne contenant pas d'agent intumescent confère la résistance aux chocs du revêtement de protection selon l'invention. Ces deux types de couches contribuent à la résistance à la corrosion et aux agressions chimiques du revêtement de protection selon l'invention.

Avantageusement, lorsqu'un liner est présent, le liner comprend une portion centrale cylindrique. Par exemple, la section de la portion centrale cylindrique est un cercle ou une ellipse. La structure de renforcement composite entoure au moins une partie du liner, par exemple la portion centrale cylindrique. Le réservoir comprend ainsi au moins une portion centrale cylindrique et deux extrémités en forme de dôme, et le revêtement de protection comprenant les couches de polyurée couvre au moins une partie de la portion centrale cylindrique du réservoir ; le revêtement de protection couvre notamment au moins 80% de la portion centrale cylindrique du réservoir, en particulier, au moins 90%, par exemple au moins 95%. Le revêtement de protection selon l'invention peut couvrir la totalité de la portion centrale cylindrique du réservoir.

Selon certains modes de réalisation de l'invention, le revêtement de protection ne couvre pas les extrémités en forme de dôme du réservoir.

Selon d'autres modes de réalisation de l'invention, au moins une couche à base de polyurée du revêtement de protection couvre les extrémités du réservoir.

Les extrémités du réservoir peuvent être couvertes au moins en partie ou en totalité par une couche à base de polyurée du revêtement contenant un agent intumescent telle que définie dans ce qui précède.

Selon une variante, les extrémités du réservoir sont couvertes au moins en partie ou en totalité par une couche à base de polyurée du revêtement ne contenant pas un agent intumescent telle que définie dans ce qui précède. La ou les couches à base de polyurée contenant un agent intumescent ne recouvrent pas les extrémités du réservoir.

Selon une autre variante, les extrémités du réservoir sont couvertes au moins en partie par au moins une couche à base de polyurée ne contenant pas un agent intumescent et par au moins une couche à base de polyurée contenant un agent intumescent. En particulier, le revêtement de protection dans son ensemble couvre au moins en partie les extrémités du réservoir, notamment il couvre essentiellement la totalité des extrémités du réservoir.

Le revêtement de protection peut être appliqué ou déposé sur le réservoir selon des méthodes connues de l'homme du métier.

Il peut notamment être déposé par pulvérisation sous pression, par immersion ou au pinceau. De préférence, le revêtement est appliqué par pulvérisation.

Avantageusement, les étapes c1 et c2 sont effectuées successivement. Le temps entre les étapes c1) et c2) d'application des deux couches est généralement inférieur à une heure. La couche de protection à base de polyurée obtenue à partir du mélange (I) se trouve à l'extérieur du revêtement de protection, il s'agit de la couche la plus externe du revêtement de protection.

Selon une variante du procédé, au moins une couche supplémentaire à base de polyurée est déposée sur le corps creux. Le procédé comprend alors au moins une étape supplémentaire de dépôt d'un mélange d'au moins une résine et d'au moins un durcisseur tels que définis dans le présent texte. Cette étape peut être effectuée entre les étapes c1 et c2, ou avant l'étape c1.

Après les étapes de dépôt des mélanges des couches successives à base de polyurée, le produit obtenu (comprenant le corps creux recouvert d'au moins deux couches à base de polyurée) est mis dans des conditions permettant la réticulation complète et le durcissement des polyurées.

Les étapes de dépôt des couches de revêtement à base de polyurée sont effectuées à une température de 15°C à 75°C ; elles peuvent être effectuées à température ambiante, cette température devant être supérieure ou égale au point de rosée + 3°C.

Selon l'un des modes de réalisation de l'invention, les étapes de dépôt des couches à base de polyurée sont effectuées à température ambiante ; le corps creux obtenu après la sortie du four est laissé à reposer pendant une durée variable, jusqu'à refroidissement. Le temps pour obtenir un revêtement de protection comprenant les couches à base de polyurée est inférieur ou égal à vingt-quatre heures, notamment inférieur ou égale à sept heures, généralement compris entre trois heures et sept heures.

Selon l'un des modes de réalisation de l'invention, les étapes de dépôt des couches à base de polyurée sont effectuées directement après la sortie du four du corps creux. Par directement, on entend après une période de temps inférieure ou égale à une heure après l'obtention du corps creux, dont la température n'est pas retournée à celle de la température ambiante. La température de surface du corps creux est d'environ 70°C +/-5°C. Le temps pour obtenir un revêtement de protection comprenant les couches à base de polyurée est inférieur ou égal à trois heures.

Le corps creux comporte une partie centrale cylindrique et deux extrémités en forme de dôme. La partie centrale cylindrique est généralement recouverte au moins en partie par la structure de renforcement composite ; la structure de renforcement composite ne recouvre pas les extrémités en forme de dôme.

Selon un mode de réalisation, le dépôt des mélanges (D) et (I) est réalisé sur au moins 90% de la surface de la partie cylindrique du corps creux, en particulier, sur la totalité de la surface de la partie cylindrique du corps creux (recouvert de la structure de renforcement composite). Le dépôt peut être effectué exclusivement sur la partie cylindrique et/ou sur au moins une partie des extrémités en forme de dôme du corps creux.

Selon une variante du procédé, au moins un des mélanges (D) et (I) est déposé, en outre, sur au moins une partie des extrémités en forme de dôme du corps creux. Il peut s'agir uniquement du mélange (D), uniquement du mélange (I), avantageusement du mélange (D). Selon une variante, les mélanges (D) et (I) sont déposés sur la partie cylindrique du corps creux et sur ses extrémités en forme de dôme.

Le procédé pourra notamment comprendre les étapes suivantes, après la préparation, selon des méthodes connues de l'homme du métier, du corps creux comportant la structure de renforcement composite et, le cas échéant, un liner.

On prépare un mélange de résine tel que défini dans le présent texte, comportant, de préférence, des amines à chaînes polymériques longues et ramifiées avec peu d'amines aromatiques. On prépare par ailleurs un durcisseur tel que défini dans le présent texte comportant un mélange de composés polyisocyanates.

Le mélange de résine et le durcisseur est introduit dans une chambre de mélange d'un dispositif de pulvérisation, dans un rapport stœchiométrique de 1:1 +/-5%. La réaction est quasi immédiate et la polyurée est pulvérisée sur au moins une partie du corps creux pour constituer la couche obtenue à partir du mélange (D) (ou couche (D)). Les conditions de pulvérisation et la quantité de mélange sont ajustées pour obtenir une couche (D) présentant une épaisseur supérieure ou égale à 1 mm, et inférieure ou égale à 3 mm, notamment inférieure ou égale à 2 mm.

Avantageusement, la température dans la chambre de mélange est de 80°C +/- 10°C, et la pression est de 180 bars +/- 20 bars.

On prépare un mélange de résine tel que défini dans le présent texte, comportant, de préférence, des amines à chaînes aliphatiques courtes ou aromatiques et contenant un agent intumescent. On prépare par ailleurs un durcisseur tel que défini dans le présent texte, comportant un mélange de composés polyisocyanates identiques ou compatibles avec le durcisseur de la première couche de polyurée.

Le mélange de résine et le durcisseur sont introduits dans une chambre de mélange d'un dispositif de pulvérisation, dans un rapport stœchiométrique de 1:1 +/-3%. La réaction est quasi immédiate ; la polyurée est pulvérisée sur au moins une partie du corps creux revêtu du premier mélange de résine et de durcisseur pour constituer la couche obtenue à partir du mélange (I) (ou couche (I)). Les conditions de pulvérisation et la quantité de mélange sont ajustées pour obtenir une couche (I) présentant une épaisseur supérieure ou égale à 1 mm, et inférieure ou égale à 3 mm, notamment inférieure ou égale à 2 mm.

Avantageusement, la température dans la chambre de mélange est de 80°C +/- 10°C, et la pression est de 180 bars +/- 20 bars.

Les mélanges de résine et de durcisseur sont projetés sur le corps creux par un pistolet de pulvérisation connu de l'homme du métier. On utilise, par exemple, un pistolet dit "airless" avec une chambre mécanique et un jet plat.

On laisse ensuite les couches de polyurée durcir, pendant un temps compris entre trois heures et sept heures, à température ambiante ou dans une enceinte maintenue à une température d'environ 70°C.

Lors du dépôt du mélange de résines et de durcisseur (comprenant optionnellement au moins agent choisi parmi les additifs, les charges et/ou les agents retardateurs de feu tels que les agents intumescents), un début de polymérisation se produit. Toutefois, le durcissement de la couche n'est pas complet lors du dépôt de la couche à base de polyurée suivante.

On entend par polymérisation une réaction comprenant une réticulation. La polymérisation est une réaction chimique entre des molécules, provoquée, par exemple, par un catalyseur ou un réactif, avec l'action de la chaleur ou de l'humidité ambiante par laquelle une molécule de masse molaire plus élevée est formée. Les molécules initiales peuvent être des monomères ou des prépolymères. La réticulation correspond à la formation de liaisons chimiques suivant les différentes directions de l'espace au cours de cette polymérisation entre les chaînes de polymère et les agents de réticulation présents dans le produit, Le résultat donne un réseau moléculaire tridimensionnel qui donne l'élasticité au produit et empêche son fluage.

Le produit susceptible d'être obtenu par un procédé tel que décrit dans ce qui précède est un des objets de l'invention.

Selon un mode de réalisation avantageux de l'invention, on utilise le mélange de résine POLYRESYST^{®} H 20020-70 RE et de durcisseur POLYRESYST^{®} H20020-70 HA commercialisé par Huntsman. Ledit mélange est préférentiellement réalisé en volume 2/1 ; 1/2.

Selon un autre mode de réalisation avantageux, on utilise le mélange de durcisseur POLYRESYST H24505-90W HA et de résine POLYRESYST H24505-90W RE commercialisé par Huntsman Ledit mélange est préférentiellement réalisé en volume 2/1 ;1/2.

En particulier, dans le procédé, le mélange de résine et de durcisseur utilisé pour préparer le mélange (D) est obtenu par mélange des produits POLYRESYST^{®} H 20020-70 RE et POLYRESYST^{®} H20020-70 HA dans un rapport de 1:1 +/-5% en volume. La réaction est quasi immédiate et la polyurée est pulvérisée sur au moins une partie du corps creux pour constituer la couche obtenue à partir du mélange (D) (ou couche (D)). Le mélange de résine utilisée pour préparer le mélange (I) est obtenu par mélange des produits POLYRESYST H24505-90W HA et POLYRESYST H24505-90W RE. Le mélange de résine et de durcisseur est introduit dans une chambre de mélange d'un dispositif de pulvérisation, dans un rapport de 1:1 +/-3%. La réaction est quasi immédiate ; la polyurée est pulvérisée sur au moins une partie du corps creux revêtu du premier mélange de résine et de durcisseur pour constituer la couche obtenue à partir du mélange (I) (ou couche (I)).

Le réservoir comportant le revêtement de protection comprenant deux couches à base de polyurée est soumis aux essais définis par le Règlement n°134 (CEE-ONU). Il répond aux normes prescrites par ce règlement.

## Revendications

1. Réservoir sous pression comprenant :
- une structure de renforcement composite,
revêtu au moins en partie par un revêtement de protection, dans lequel le revêtement de protection comprend au moins deux couches de protection à base de polyurée,
- au moins une des couches de protection à base d'une ou plusieurs polyurée(s) comprenant, en outre, au moins un agent retardateur de feu qui est un agent intumescent,
la ou les polyurée(s) étant un ou des produit(s) de réaction d'au moins un durcisseur et d'au moins une résine, pour lesquels
(i) la résine est un composé polyamine aromatique ou aliphatique, optionnellement substitué par au moins une fonction alcool,
(ii) le durcisseur est un composé polyisocyanate aromatique, cycloaliphatique, hétérocyclique, alicyclique ou aliphatique, et leurs produits de réaction sous forme d'oligomères, aliphatiques ou aromatiques,
au moins une résine d'une première couche de protection à base de polyurée étant différente d'au moins une résine d'une deuxième couche de protection à base de polyurée,
la couche de protection contenant l'agent intumescent étant la couche la plus externe du revêtement.

2. Réservoir sous pression selon la revendication 1, **caractérisé en ce qu'**il comprend :
- un liner et
- une structure de renforcement composite,
revêtu au moins en partie par un revêtement de protection, dans lequel le revêtement de protection comprend au moins deux couches de protection à base de polyurée,
- au moins une des couches de protection à base d'une ou plusieurs polyurée(s) comprenant, en outre, au moins un agent retardateur de feu qui est un agent intumescent,
la ou les polyurée(s) étant un ou des produit(s) de réaction d'au moins un durcisseur et d'au moins une résine, pour lesquels
(i) la résine est un composé polyamine aromatique ou aliphatique, optionnellement substitué par au moins une fonction alcool,
(ii) le durcisseur est un composé polyisocyanate aromatique, cycloaliphatique, hétérocyclique, alicyclique ou aliphatique, et leurs produits de réaction sous forme d'oligomères, aliphatiques ou aromatiques,
au moins une résine d'une première couche de protection à base de polyurée étant différente d'au moins une résine d'une deuxième couche de protection à base de polyurée,
la couche de protection contenant l'agent intumescent étant la couche la plus externe du revêtement.

3. Réservoir selon l'une au moins des revendications 1 ou 2 **caractérisé en ce que** l'épaisseur totale du revêtement de protection est inférieure ou égale à 12 mm, notamment inférieure ou égale à 8 mm, en particulier, inférieure ou égale à 4 mm, et **en ce que** l'épaisseur totale est supérieure ou égale à 1 mm.

4. Réservoir selon l'une au moins des revendications 1 à 3, **caractérisé en ce que** l'agent intumescent est choisi parmi le groupe des composés halogénés, des composés phosphorés, des composés borés, des hydroxydes métalliques et des oxydes métalliques et du mélange d'au moins deux d'entre eux.

5. Réservoir selon l'une au moins des revendications 1 à 4, **caractérisé en ce qu'**au moins une des couches de protection à base de polyurée contient au moins une charge, sous forme de particules ou de fibres, ladite charge étant choisie parmi les céramiques, les métaux, les oxydes métalliques, les plastiques et leurs mélanges.

6. Réservoir selon l'une au moins des revendications précédentes, **caractérisé en ce qu'**au moins une des couches de protection à base de polyurée ne contient pas d'agent retardateur de feu qui est un agent intumescent.

7. Réservoir selon l'une au moins des revendications précédentes, **caractérisé en ce qu'**au moins une des couches de protection à base de polyurée contient au moins un additif choisi parmi les absorbeurs d'UV, les stabilisateurs à la lumière, les antioxydants, les agents dispersants, les agents mouillants tels que des tensioactifs, les agents plastifiants, les antimousses et les atténuateurs d'impact.

8. Réservoir selon l'une au moins des revendications précédentes, **caractérisé en ce qu'**il comprend au moins une portion centrale cylindrique et deux extrémités en forme de dôme, et **en ce que** le revêtement de protection couvre la portion centrale cylindrique du réservoir.

9. Réservoir selon l'une au moins des revendications précédentes, comprenant au moins une portion centrale cylindrique et deux extrémités en forme de dôme, **caractérisé en ce qu'**au moins une couche à base de polyurée du revêtement de protection couvre les extrémités du réservoir.

10. Réservoir selon l'une au moins des revendications précédentes, **caractérisé en ce que** les durcisseurs pour chacune des couches à base de polyurée sont compatibles ou identiques.

11. Réservoir selon l'une au moins des revendications précédentes, **caractérisé en ce qu'**au moins un durcisseur est choisi parmi les polymères d'alpha-hydro-oméga-hydroxypoly[oxy(méthyl-1,2-éthanediyl)] avec le 1,1'-méthylènebis[isocyanatobenzène], la masse de réaction (reaction mass) du 4,4'-méthylènediphényl diisocyanate (MDI) et de o-(pisocyanatobenzyl) phényl isocyanate, le 4,4'-méthylènediphényl diisocyanate (MDI) et les oligomères du 4,4'-méthylènediphényl diisocyanate (MDI).

12. Réservoir selon l'une au moins des revendications précédentes, **caractérisé en ce qu'**au moins une couche à base de polyurée est obtenue à partir d'une résine choisie dans le groupe constitué par polyoxypropylènediamine, diéthylméthylbenzènediamine, glycéryl poly(oxypropylène)triamine, polyalkylamine, polyarylamine et qu'au moins une couche à base de polyurée est obtenue à partir d'une résine choisie dans le groupe constitué par diéthylméthylbenzènediamine et les dérivés d'oléylamine.

13. Véhicule comprenant un réservoir selon l'une au moins des revendications 1 à 12.

14. Procédé de préparation d'un réservoir selon l'une quelconque des revendications 1 à 12, comprenant les étapes suivantes :
a) obtention d'un mandrin,
b) enroulement d'une structure de renforcement composite autour d'au moins une partie du mandrin pour obtenir un corps creux,
c) formation sur au moins une partie de la surface de la structure de renforcement composite d'un revêtement de protection comprenant les étapes de :
c1) dépôt sur au moins une partie de la structure de renforcement composite d'un mélange (D) d'au moins une résine et d'au moins un durcisseur tels que définis dans l'une des revendications précédentes, le rapport stœchiométrique entre la résine et le durcisseur étant compris entre 2:1 et 1:2, et polymérisation du mélange (D) pour obtenir une première couche de protection à base de polyurée,
c2) dépôt sur au moins une partie de la surface du corps creux revêtu d'une couche de protection obtenu à l'issue de l'étape c1), d'un mélange (I) d'au moins une résine, d'au moins un durcisseur et d'au moins un agent retardateur de feu tels que définis dans l'une des revendications précédentes, le rapport stœchiométrique entre la résine et le durcisseur étant compris entre 2:1 et 1:2, de préférence, 1:1, et polymérisation du mélange (I) pour obtenir une deuxième couche de protection à base de polyurée,
au moins une résine du mélange (D) étant différente d'au moins une résine du mélange (1).

15. Procédé de préparation d'un réservoir selon la revendication 14,
**caractérisé en ce qu'**il comprend les étapes suivantes :
a) obtention d'un mandrin qui est un liner,
b) enroulement d'une structure de renforcement composite autour d'au moins une partie dudit liner pour obtenir un corps creux,
c) formation sur au moins une partie de la surface de la structure de renforcement composite d'un revêtement de protection comprenant les étapes de :
c1) dépôt sur au moins une partie de la structure de renforcement composite d'un mélange (D) d'au moins une résine et d'au moins un durcisseur tels que définis dans l'une des revendications précédentes, le rapport stœchiométrique entre la résine et le durcisseur étant compris entre 2:1 et 1:2, et polymérisation du mélange (D) pour obtenir une première couche de protection à base de polyurée,
c2) dépôt sur au moins une partie de la surface du corps creux revêtu d'une couche de protection obtenu à l'issue de l'étape c1), d'un mélange (I) d'au moins une résine, d'au moins un durcisseur et d'au moins un agent retardateur de feu tels que définis dans l'une des revendications précédentes, le rapport stœchiométrique entre la résine et le durcisseur étant compris entre 2:1 et 1:2, de préférence, 1:1, et polymérisation du mélange (I) pour obtenir une deuxième couche de protection à base de polyurée,
au moins une résine du mélange (D) étant différente d'au moins une résine du mélange (I).

## Patentansprüche

1. Druckbehälter, aufweisend:
eine Verbund-Verstärkungsstruktur,
die zumindest teilweise mit einer Schutzbeschichtung beschichtet ist, wobei die Schutzbeschichtung mindestens zwei Schutzschichten auf Polyharnstoffbasis aufweist,
wobei mindestens eine der Schutzschichten auf Basis eines oder mehrerer Polyharnstoffe ferner mindestens ein flammhemmendes Mittel aufweist, das ein intumeszierendes Mittel ist,
wobei der oder die Polyharnstoffe ein oder mehrere Reaktionsprodukt(e) aus mindestens einem Härter und mindestens einem Harz sind, für die gilt:
(i) das Harz ist eine aromatische oder aliphatische Polyaminverbindung, optional substituiert mit mindestens einer Alkoholfunktion,
(ii) der Härter ist eine aromatische, cycloaliphatische, heterocyclische, alicyclische oder aliphatische Polyisocyanatverbindung sowie deren Reaktionsprodukte in Form aliphatischer oder aromatischer Oligomere,
wobei mindestens ein Harz einer ersten Schutzschicht auf Polyharnstoffbasis von mindestens einem Harz einer zweiten Schutzschicht auf Polyharnstoffbasis verschieden ist,
wobei die das intumeszierende Mittel enthaltende Schutzschicht die äußerste Schicht der Beschichtung ist.

2. Druckbehälter nach Anspruch 1, **dadurch gekennzeichnet, dass** er
aufweist:
- einen Liner und
- eine Verbund-Verstärkungsstruktur,
die zumindest teilweise mit einer Schutzbeschichtung beschichtet ist, wobei die Schutzbeschichtung mindestens zwei Schutzschichten auf Polyharnstoffbasis aufweist,
wobei mindestens eine der Schutzschichten auf Basis eines oder mehrerer Polyharnstoffe ferner mindestens ein flammhemmendes Mittel aufweist, das ein intumeszierendes Mittel ist,
wobei der oder die Polyharnstoffe ein oder mehrere Reaktionsprodukt(e) aus mindestens einem Härter und mindestens einem Harz sind, für die gilt:
(i) das Harz ist eine aromatische oder aliphatische Polyaminverbindung, optional substituiert mit mindestens einer Alkoholfunktion,
(ii) der Härter ist eine aromatische, cycloaliphatische, heterocyclische, alicyclische oder aliphatische Polyisocyanatverbindung sowie deren Reaktionsprodukte in Form aliphatischer oder aromatischer Oligomere,
wobei mindestens ein Harz einer ersten Schutzschicht auf Polyharnstoffbasis von mindestens einem Harz einer zweiten Schutzschicht auf Polyharnstoffbasis verschieden ist,
wobei die das intumeszierende Mittel enthaltende Schutzschicht die äußerste Schicht der Beschichtung ist.

3. Behälter nach mindestens einem der Ansprüche 1 oder 2, **dadurch gekennzeichnet, dass** die Gesamtdicke der Schutzbeschichtung kleiner oder gleich 12 mm ist, insbesondere kleiner oder gleich 8 mm, besonders bevorzugt kleiner oder gleich 4 mm, und dass die Gesamtdicke größer oder gleich 1 mm ist.

4. Behälter nach mindestens einem der Ansprüche 1 bis 3, **dadurch gekennzeichnet, dass** das intumeszierende Mittel ausgewählt ist aus der Gruppe bestehend aus halogenierten Verbindungen, phosphorhaltigen Verbindungen, borhaltigen Verbindungen, Metallhydroxiden und Metalloxiden sowie Mischungen aus mindestens zwei davon.

5. Behälter nach mindestens einem der Ansprüche 1 bis 4, **dadurch gekennzeichnet, dass** mindestens eine der Schutzschichten auf Polyharnstoffbasis mindestens einen Füllstoff in Form von Partikeln oder Fasern enthält, wobei der Füllstoff ausgewählt ist aus Keramiken, Metallen, Metalloxiden, Kunststoffen und deren Mischungen.

6. Behälter nach mindestens einem der vorhergehenden Ansprüche, **dadurch gekennzeichnet, dass** mindestens eine der Schutzschichten auf Polyharnstoffbasis kein flammhemmendes Mittel enthält, das ein intumeszierendes Mittel ist.

7. Behälter nach mindestens einem der vorhergehenden Ansprüche, **dadurch gekennzeichnet, dass** mindestens eine der Schutzschichten auf Polyharnstoffbasis mindestens ein Additiv enthält, das ausgewählt ist aus UV-Absorbern, Lichtstabilisatoren, Antioxidantien, Dispergiermitteln, Benetzungsmitteln wie Tensiden, Weichmachern, Entschäumern und Schlagzähmodifikatoren.

8. Behälter nach mindestens einem der vorhergehenden Ansprüche, **dadurch gekennzeichnet, dass** er mindestens einen zylindrischen Mittelabschnitt und zwei kuppelförmige Enden aufweist, und dass die Schutzbeschichtung den zylindrischen Mittelabschnitt des Behälters bedeckt.

9. Behälter nach mindestens einem der vorhergehenden Ansprüche, aufweisend mindestens einen zylindrischen Mittelabschnitt und zwei kuppelförmige Enden, **dadurch gekennzeichnet, dass** mindestens eine Schicht auf Polyharnstoffbasis der Schutzbeschichtung die Enden des Behälters bedeckt.

10. Behälter nach mindestens einem der vorhergehenden Ansprüche, **dadurch gekennzeichnet, dass** die Härter für jede der Schichten auf Polyharnstoffbasis kompatibel oder identisch sind.

11. Behälter nach mindestens einem der vorhergehenden Ansprüche, **dadurch gekennzeichnet, dass** mindestens ein Härter ausgewählt ist aus Polymeren von alpha-Hydro-omega-hydroxypoly[oxy(methyl-1,2-ethandiyl)] mit 1,1'-Methylenbis[isocyanatobenzol], der Reaktionsmasse aus 4,4'-Methylendiphenyldiisocyanat (MDI) und o-p-(Isocyanatobenzyl)phenylisocyanat, 4,4'-Methylendiphenyldiisocyanat (MDI) und Oligomeren von 4,4'-Methylendiphenyldiisocyanat (MDI).

12. Behälter nach mindestens einem der vorhergehenden Ansprüche, **dadurch gekennzeichnet, dass** mindestens eine Schicht auf Polyharnstoffbasis aus einem Harz erhalten wird, das ausgewählt ist aus der Gruppe bestehend aus Polyoxypropylendiamin, Diethylmethylbenzoldiamin, Glycerylpoly(oxypropylen)triamin, Polyalkylamin und Polyarylamin, und dass mindestens eine Schicht auf Polyharnstoffbasis aus einem Harz erhalten wird, das ausgewählt ist aus der Gruppe bestehend aus Diethylmethylbenzoldiamin und Oleylaminderivaten.

13. Fahrzeug, aufweisend einen Behälter nach mindestens einem der Ansprüche 1 bis 12.

14. Verfahren zur Herstellung eines Behälters nach einem der Ansprüche 1 bis 12, aufweisend die folgenden Schritte:
a) Bereitstellen eines Dorns,
b) Wickeln einer Verbund-Verstärkungsstruktur um mindestens einen Teil des Dorns, um einen Hohlkörper zu erhalten,
c) Ausbilden einer Schutzbeschichtung auf mindestens einem Teil der Oberfläche der Verbund-Verstärkungsstruktur, aufweisend die Schritte:
c1) Aufbringen, auf mindestens einen Teil der Verbund-Verstärkungsstruktur, einer Mischung (D) aus mindestens einem Harz und mindestens einem Härter, wie in einem der vorhergehenden Ansprüche definiert, wobei das stöchiometrische Verhältnis zwischen dem Harz und dem Härter zwischen 2:1 und 1:2 liegt, und Polymerisieren der Mischung (D), um eine erste Schutzschicht auf Polyharnstoffbasis zu erhalten,
c2) Aufbringen, auf mindestens einen Teil der Oberfläche des mit einer Schutzschicht beschichteten Hohlkörpers, der am Ende von Schritt c1) erhalten wurde, einer Mischung (I) aus mindestens einem Harz, mindestens einem Härter und mindestens einem flammhemmenden Mittel, wie in einem der vorhergehenden Ansprüche definiert, wobei das stöchiometrische Verhältnis zwischen dem Harz und dem Härter zwischen 2:1 und 1:2, vorzugsweise 1:1, liegt, und Polymerisieren der Mischung (I), um eine zweite Schutzschicht auf Polyharnstoffbasis zu erhalten,
wobei mindestens ein Harz der Mischung (D) von mindestens einem Harz der Mischung (I) verschieden ist.

15. Verfahren zur Herstellung eines Behälters nach Anspruch 14, **dadurch gekennzeichnet, dass** es die folgenden Schritte aufweist:
a) Bereitstellen eines Dorns, der ein Liner ist,
b) Wickeln einer Verbund-Verstärkungsstruktur um mindestens einen Teil des Liners, um einen Hohlkörper zu erhalten,
c) Ausbilden einer Schutzbeschichtung auf mindestens einem Teil der Oberfläche der Verbund-Verstärkungsstruktur, aufweisend die Schritte:
c1) Aufbringen, auf mindestens einen Teil der Verbund-Verstärkungsstruktur, einer Mischung (D) aus mindestens einem Harz und mindestens einem Härter, wie in einem der vorhergehenden Ansprüche definiert,
wobei das stöchiometrische Verhältnis zwischen dem Harz und dem Härter zwischen 2:1 und 1:2 liegt, und Polymerisieren der Mischung (D), um eine erste Schutzschicht auf Polyharnstoffbasis zu erhalten,
c2) Aufbringen, auf mindestens einen Teil der Oberfläche des mit einer Schutzschicht beschichteten Hohlkörpers, der am Ende von Schritt c1) erhalten wurde, einer Mischung (I) aus mindestens einem Harz, mindestens einem Härter und mindestens einem flammhemmenden Mittel, wie in einem der vorhergehenden Ansprüche definiert, wobei das stöchiometrische Verhältnis zwischen dem Harz und dem Härter zwischen 2:1 und 1:2, vorzugsweise 1:1, liegt, und Polymerisieren der Mischung (I), um eine zweite Schutzschicht auf Polyharnstoffbasis zu erhalten,
wobei mindestens ein Harz der Mischung (D) von mindestens einem Harz der Mischung (I) verschieden ist.

## Claims

1. A pressure vessel comprising:
- a composite reinforcement structure,
at least partially coated with a protective coating, wherein the protective coating comprises at least two polyurea-based protective layers,
- at least one of the protective layers based on one or more polyureas further comprising at least one fire-retardant agent which is an intumescent agent,
the polyurea(s) being a reaction product or reaction product(s) of at least one hardener and at least one resin, for which
(i) the resin is an aromatic or aliphatic polyamine compound, optionally substituted by at least one alcohol group,
(ii) the hardener is an aromatic, cycloaliphatic, heterocyclic, alicyclic or aliphatic polyisocyanate compound, and their reaction products in the form of aliphatic or aromatic oligomers,
at least one resin of a first polyurea-based protective layer being different from at least one resin of a second polyurea-based protective layer,
the protective layer containing the intumescent agent being the outermost layer of the coating.

2. The pressure vessel according to claim 1, **characterised in that** it comprises:
- a liner and
- a composite reinforcement structure,
at least partially coated with a protective coating, wherein the protective coating comprises at least two polyurea-based protective layers,
- at least one of the protective layers based on one or more polyureas further comprising at least one fire-retardant agent which is an intumescent agent,
the polyurea(s) being a reaction product or reaction products of at least one hardener and at least one resin, for which
(i) the resin is an aromatic or aliphatic polyamine compound, optionally substituted by at least one alcohol group,
(ii) the hardener is an aromatic, cycloaliphatic, heterocyclic, alicyclic or aliphatic polyisocyanate compound, and their reaction products in the form of aliphatic or aromatic oligomers,
at least one resin of a first polyurea-based protective layer being different from at least one resin of a second polyurea-based protective layer,
the protective layer containing the intumescent agent being the outermost layer of the coating.

3. The vessel according to at least one of claims 1 or 2, **characterised in that** the total thickness of the protective coating is less than or equal to 12 mm, notably less than or equal to 8 mm, in particular less than or equal to 4 mm, and **in that** the total thickness is greater than or equal to 1 mm.

4. The vessel according to at least one of claims 1 to 3, **characterised in that** the intumescent agent is selected from the group comprising halogenated compounds, phosphorus compounds, boron compounds, metal hydroxides and metal oxides, and a mixture of at least two of these.

5. The vessel according to at least one of claims 1 to 4, **characterised in that** at least one of the polyurea-based protective layers contains at least one filler, in the form of particles or fibers, said filler being selected from ceramics, metals, metal oxides, plastics and mixtures thereof.

6. The vessel according to at least one of the preceding claims, **characterised in that** at least one of the polyurea-based protective layers does not contain a fire-retardant agent which is an intumescent agent.

7. The vessel according to at least one of the preceding claims, **characterised in that** at least one of the polyurea-based protective layers contains at least one additive selected from UV absorbers, light stabilizers, antioxidants, dispersant agents, wetting agents such as surfactants, plasticizing agent, defoamers and impact attenuators.

8. The vessel according to at least one of the preceding claims, **characterised in that** it comprises at least one cylindrical central portion and two dome-shaped ends, and **in that** the protective coating covers the cylindrical central portion of the vessel.

9. The vessel according to at least one of the preceding claims, comprising at least one cylindrical central portion and two dome-shaped ends, **characterised in that** at least one polyurea-based layer of the protective coating covers the ends of the vessel.

10. The vessel according to at least one of the preceding claims, **characterised in that** the hardeners for each of the polyurea-based layers are compatible or identical.

11. The vessel according to at least one of the preceding claims, **characterised in that** at least one hardener is selected from the polymers of alpha-hydro-omega-hydroxypoly[oxy(methyl-1,2-ethanediyl)] with 1,1'-methylenebis[isocyanatobenzene], the reaction mass of 4,4'-methylenediphenyl diisocyanate (MDI) and o-(pisocyanatobenzyl)phenyl isocyanate, 4,4'-methylenediphenyl diisocyanate (MDI) and oligomers of 4,4'-methylenediphenyl diisocyanate (MDI).

12. The vessel according to at least one of the preceding claims,
**characterised in that** at least one polyurea-based layer is obtained from a resin selected from the group consisting of polyoxypropylenediamine, diethylmethylbenzenediamine, glyceryl poly(oxypropylene)triamine, polyalkylamine, polyarylamine
and **in that** at least one polyurea-based layer is obtained from a resin selected from the group consisting of diethylmethylbenzenediamine and oleylamine derivatives.

13. A vehicle comprising a vessel according to at least one of claims 1 to 12.

14. A method of preparing a vessel according to any one of claims 1 to 12, comprising the following steps:
a) obtaining a mandrel,
b) winding a composite reinforcement structure around at least part of the mandrel to form a hollow body,
c) forming, on at least part of the surface of the composite reinforcement structure, a protective coating comprising the steps of:
c1) depositing on at least part of the composite reinforcement structure a mixture (D) of at least one resin and at least one hardener as defined in one of the preceding claims, the stoichiometric ratio between the resin and the hardener being between 2:1 and 1:2, and polymerizing the mixture (D) to obtain a first polyurea-based protective layer,
c2) depositing, on at least part of the surface of the hollow body coated with a protective layer obtained at the end of step c1), a mixture (I) of at least one resin, at least one hardener and at least one fire-retardant agent as defined in one of the preceding claims, the stoichiometric ratio between the resin and the hardener being between 2:1 and 1:2, preferably 1:1, and polymerizing mixture (I) to obtain a second polyurea-based protective layer,
at least one resin in mixture (D) being different from at least one resin in mixture (I).

15. A method for preparing a vessel according to claim 14, **characterised in that** it comprises the following steps:
a) obtaining a mandrel which is a liner,
b) winding a composite reinforcement structure around at least part of said liner to form a hollow body,
c) forming, on at least part of the surface of the composite reinforcement structure, a protective coating comprising the steps of:
c1) depositing on at least part of the composite reinforcement structure a mixture (D) of at least one resin and at least one hardener as defined in one of the preceding claims, the stoichiometric ratio between the resin and the hardener being between 2:1 and 1:2, and polymerizing the mixture (D) to obtain a first polyurea-based protective layer,
c2) depositing, on at least part of the surface of the hollow body coated with a protective layer obtained at the end of step c1), a mixture (I) of at least one resin, at least one hardener and at least one fire-retardant agent as defined in one of the preceding claims, the stoichiometric ratio between the resin and the hardener being between 2:1 and 1:2, preferably 1:1, and polymerizing mixture (I) to obtain a second polyurea-based protective layer,
at least one resin in mixture (D) being different from at least one resin in mixture (I).
